# EUROPEAN PATENT SPECIFICATION

(11) **EP 3 257 412 B1**
(45) Date of publication and mention of the grant of the patent: **20.07.2022**
(21) Application number: 16749508.4
(22) Date of filing: 15.02.2016
(51) Int. Cl.: A47J 43/046, A47J 43/07, A47J 27/00, A47J 27/04

(54) **FOOD PROCESSING AND COOKING MACHINE**
LEBENSMITTELVERARBEITUNGS- UND KOCHMASCHINE
MACHINE DE CUISSON ET DE TRAITEMENT D'ALIMENTS

(30) Priority: 13.02.2015 KR 20150022097; 07.07.2015 KR 20150096418; 20.07.2015 KR 20150102328; 10.08.2015 KR 20150112428; 01.02.2016 KR 20160012450
(43) Date of publication of application: 20.12.2017
(73) Proprietor: Kim, Hong Bae, Paju-si, Gyeonggi-do 10895 (KR)
(72) Inventor: Kim, Hong Bae, Paju-si, Gyeonggi-do 10895 (KR)
(74) Representative: Mittler, Enrico
(86) International application number: PCT/KR2016/001468
(87) International publication number: WO 2016/129968

(56) References cited:
- EP-A1- 2 522 263
- DE-A1- 2 928 295
- KR-A- 20020 082 956
- KR-A- 20040 056 102
- KR-A- 20050 078 863
- KR-U- 20100 001 541
- US-A- 5 592 872
- US-A1- 2014 252 146

## Description

### [TECHNICAL FIELD]

The present invention relates to a food processing and cooking apparatus and, more particularly, to a food processing and cooking apparatus for facilitating management since a container module for containing food materials during cooking is detachably provided with a housing module, increasing the stability and efficiency of the apparatus since the apparatus is configured to discharge generated heat and carbon powder to the outside, while reducing noise and vibration, and enabling separate secondary cooking by using steam generated during cooking.

### [BACKGROUND OF ART]

In general, tofu contains unsaturated fatty acids, is a low-calorie high-protein food and produces a great feeling of fullness after eating, and thus, eating tofu is good for diet. Also, lecithin ingredient contained in tofu protects the stomach wall and make stomach and intestine comfortable. In addition, dietary fiber ingredient and oligosaccharide ingredient promote the intestinal motility and so help prevention of constipation.

A container such as a pan or a pot is used for cookingfood materials such as soybean, various grains and fruit for cooking such tofu dish, porridge, boiled rice, juice, soy milk, bean curd residue, or the like, and the crushingapparatus and cooking apparatus are separately used during the cooking process.

In other words, when cooking bean milk, tofu, bean curd residue and the like in a traditional manner, the cooking is mademanually at plural stages, and thus there was a disadvantage of inconvenience and time-consuming.

Recently, cookers and the like which can be easily cooked in one equipment have been developed and used even at home. Equipments such as a device for making household bean milk and tofu are used for easily cooking in one apparatus at home, instead of cookingthrough plural manual works, when cooking bean milk, tofu, bean curd residue and the like.

A conventional cooking device for cooking tofu or the like as described above is disclosed in Korean Utility Model Registration No. 20-0338580. According to the disclosed conventional device, a food material is added to a cooking container, heat is applied to the bottom or inside of the container, and crushing and cooking are perfomed while rotating the materials inside the containerby a rotary blade.

However, in such a conventional device,since anelectric field unit and a power unit are integrally combined in the processing apparatus,inconvenience occurs during discharging the cooked food to the outside, and vibrations are severe during cooking. Thus, there was a problem that the forces forcrushingduring the internalcookingare not transmitted properly and so generation of noise is serious.

Further, when the food is cooked, the vibration due to the power unit is severe, the force of crushing the internal food materials is not transmitted properly, and there is a lot of noise, whereby causes inconvenience during cooking.

Meanwhile, the power unit performs the operation of crushing the food materials using the power due to the rotational force of the motor. As these driving motors, most of universal motorsthat can use both alternating and direct current are used.

These universal motors are used for various purposes because they are easily rotated at a high speed and have a constant rotation direction even if the polarity of the voltage changes.However, there is a disadvantage in that the number of no-load revolution is high, the electrical and mechanical noises are large, and the life span is short.

Further, when supplying electricity to a commutator, carbon brushes are used, and friction with the commutator is minimized, but they are worn out little by little, which causes generation of carbon powder.

In addition, since the power unit utilizes the rotational force of the driving motor within a limited space, the generation of heat due to the driving of the motor cannot be avoided.

Therefore, if the heat and carbon powder generated by the motor fail to discharge to the outside in a timely manner, there is a possibility that the head and carbon powder may cause frequent failures of the equipment.

Finally, the apparatus according to the prior art has a problem that it cannot utilize steam in a manner of discharging steam generated during food processing to the outside.

US 5592872 discloses a food processing and cooking devise as defined in the preamble of claim 1.

### [DETAILED DESCRIPTION OF THE INVENTION]

### [Technical Problem]

The present invention has been made to solve the above-mentioned problems. A first object of the invention is to maximize user's convenience by independently arranging a container module for cooking and a power module for transmitting power using a housing module.

A second object of the invention is to prevent or reduce the noise and vibration of a cookware by using a mounting groove and an anti-vibration member, and maximize the stability of the apparatus by discharging generated heat and carbon powder by using an exhaust fan and a motor cover having a duct channel.

A third object of the invention is to improve the stability of the apparatus by providing a connection terminal so that electricity can be supplied only when the container module is attached to the housing module.

A fourth object of the invention is to make it possible to easily and safely separate the rotary blades to facilitate washing, and reuse steam generated during cooking, thereby cooking new foods.

### [Technical Solution]

In order to achieve the above objects, the present invention provides a food processing and cooking apparatus according to claim 1.

Meanwhile, the anti-vibration member includes a first anti-vibration member which is inserted into the anti-vibration groove formed along the outer peripheral surface of the base bracket, fixed so as to penetrate through an anti-vibration coupling unit, and equipped between the base bracket and the lower housing; and a second anti-vibration member which is formed so as to protrude downward while penetrating and coupling to the bottom surface of the lower housing.

Also, the power module includes a first discharge fan which is disposed above the motor box and forming a vortex on the inner space of the motor box in accordance with driving, and amotor cover which includes the first discharge fan therein, and formed with a duct channel communicating with a exhaust hole formed on one side of the upper housing to directing the flow of air to the outside.

Accordingly, the heat and carbon powder generated by the motor are discharged to the outside, and as necessary, a second discharge fan is further provided at an end of the duct channel.

On the other hand, the present invention further includes a steamer attached to the upper part of the container module and performing cooking other than cooking in the container module by using diffused steam.

### [ADVANTAGEOUS EFFECTS]

As described above, the food processing and cooking apparatus according to the present invention has an effect of maximizing user's convenience by independently arranging a container module for cooking and a power module for transmitting power using a housing module.

Also, the food processing and cooking apparatus has an effect of preventing or reducing the noise and vibration of the cookware by using the mounting groove and the anti-vibration member, and maximizing the stability of the apparatus by discharging generated heat and carbon powder by using an exhaust fan and a motor cover having a duct channel.

Further, the food processing and cooking apparatus has an effect of improving the stability of the apparatus by providing a connection terminal, so that electricity can be supplied only when the container module is attached to the housing module.

In addition, the food processing and cooking apparatus has an effect of making it possible to easily and safely separating the rotary blades to facilitate washing, and re-using steam generated during cooking, thereby cooking new foods.

### [BRIEF DESCRIPTION OF THE DRAWINGS]

FIG. 1 is a perspective view showing a food processing and cooking apparatus according to the present invention.
FIG. 2 is a view showing a separated appearance of a container module and a housing module of a food processing and cooking apparatus according to the present invention.
FIG. 3 is a schematic cross-sectional view showing a food processing cooking apparatus according to the present invention.
FIG. 4 is an exploded perspective view showing a food processing cooking apparatus according to the present invention.
FIG. 5 and FIG. 6 are views showing a container module of a food processing and cooking apparatus according to the present invention.
FIG. 7 is a view showing a crushing controller coupled to a rotary blade of a food processing and cooking apparatus according to the present invention.
FIG. 8 is a schematic cross-sectional view showing a lower housing and a power module of a food processing and cooking apparatus according to the present invention.
FIG. 9 is a view showing a first anti-vibration member of a food processing and cooking apparatus according to the present invention.
FIG. 10 is a cross-sectional view showing a part of a power module of a food processing cooking apparatus according to the present invention.
FIG. 11 is a view showing a state of including a steam-cooking module of a food processing cooking apparatus according to the present invention.
FIG. 12 is an exploded perspective view showing a steam cooking module of a food processing and cooking apparatus according to the present invention.

### [DETAILED DESCRIPTION OF THE EMBODIMENTS]

Hereinafter, preferred embodiments of the food processing and cooking apparatusaccording to the present invention will be described in detail with reference to the accompanying drawings.

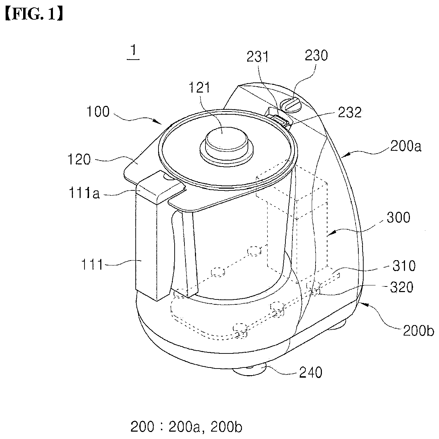

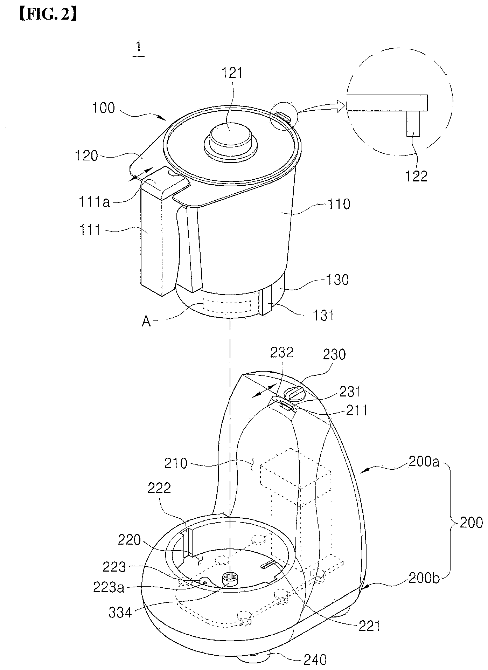

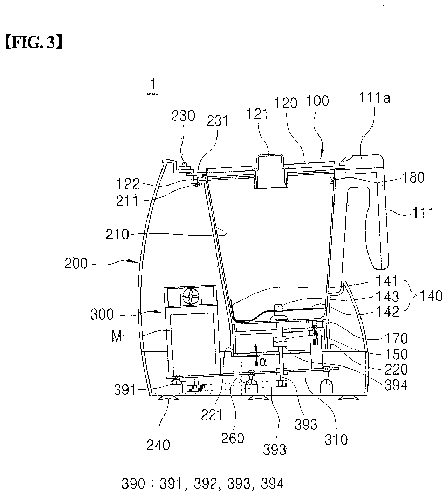

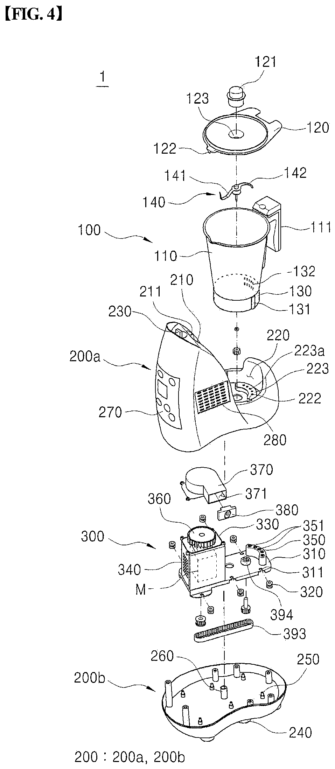

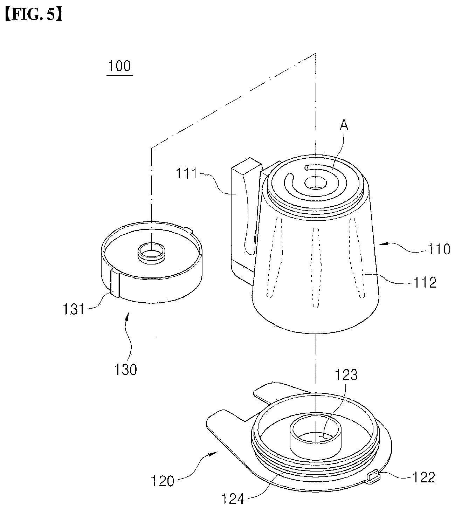

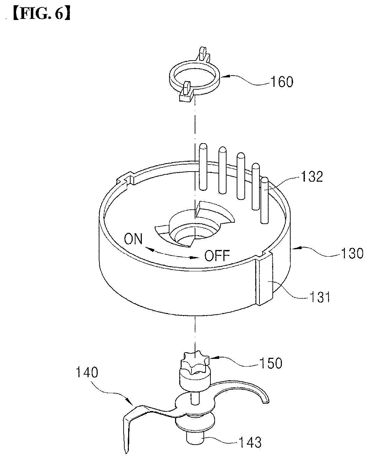

First, FIG. 1 is a perspective view showing a food processing and cooking apparatus according to the present invention.FIG. 2 is a view showing a separated appearance of a container module and a housing module. FIG. 3 is a schematic cross-sectional view showing a food processing cooking apparatus according to the present invention.FIG. 4 is an exploded perspective view showing a food processing cooking apparatus according to the present invention.FIG. 5 and FIG. 6 are views showing a container module of a food processing and cooking apparatus according to the present invention.

As shown in the figures, the food processing and cooking apparatus 1 according to the present invention is configured such that the crushing operation using a rotation blade 140 and the cooking operation using a heater A can be used at the same time when cooking food or drink using food materials such as soybean, various grains and fruit in order to cook tofu dish, porridge, boiled rice, juice, soy milk, bean curd residue and the like.

To this end, the food processing and cooking apparatus 1 according to the present invention is largely composed of a container module 100, a housing module 200, and a power module 300.

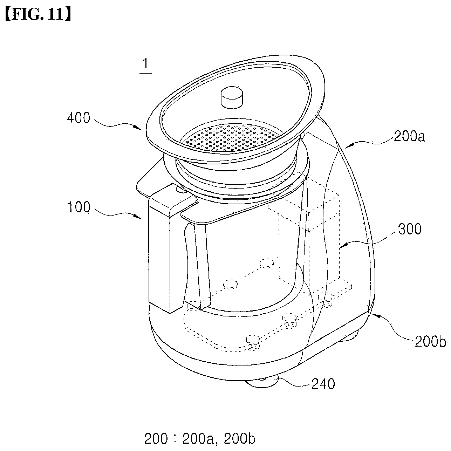

Further, the apparatus further includes a steamer (FIG. 11, 400) detachably attached to the upper part of the housing module 200 as necessary.

Specifically, the container module 100 has an inner space and has a rotary blade 140 therein for crushing the food materials contained in the interanl space.

The housing module 200 is formed by the coupling of an upper housing 200a for detachably supporting the container module 100 and a lower housing 200b coupled thereto, and has an inner space of a size that a power module 300 can be provided therein.

In addition, the power module 300 is mounted and fixed by the base bracket 310 on the inner space of the housing module 200, and transmits the power generated by motor M to the power-transmitting unit 390, thereby rotating the rotary blade 140 of the container module 100.

Meanwhile, the container module 100 is detachably attached while preventing from being shaken in the mounting grooves 210 and 220 of the upper housing 200a, and the power module 300 is configured such that vibration and noise are reduced by the anti-vibration member 240.

In addition, the steamer (400 in FIG. 11) is attached to the upper part of the container module 100, and can cook a separate food or drink by using the steam diffused during cooking food materials rather than cooking in the container module 100.

Referring to FIGS. 1 to 6 again, the structure of the food processing and cooking apparatus 1 according to the present invention will be described in detail as follows.

Preferably, the container module 100 is a part in which food materials for cookingand processing are contained, and includes a container body 110 having an inner space whose upper part is opened and a handle 111 on an outer side, and a container base 130 coupled to the lower part of the container body to support it, wherein the upper part of the container body 110 is configured to include a container cover 120 for coveringand sealing the opened inner space.

Then, as necessary, the container base 130 includes a heater A for performing a cooking operation by applying heat to the food materials on the inner space of the container body 110.

At this time, the heater A may be formed on one side of the housing module 200 separately from the container module 100.

In one embodiment, referring to FIGS. 2 and 5, the heater A is provided on the upper part of the container base 130 of the container module 100 or on the lower part of the container body110, and are arranged in a circular shape or a ring shape depending on the shape of the container module.

On the other hand, as necessary, the heater A may be configured in various shapes such as a bar shape having a predetermined length capable of generating heat in the food, and is coated and disposed on the inner bottom surface of the container body 110 of the container module 100 or disposed on the outer bottom surface of the container body 110 or disposed on the top of the container base 130, in order to prevent the direct contact with water or a cooking material.

Meanwhile, the container body 110 includes a coating layer made of a metal material having corrosion resistance and heat resistance such as stainless steel. This ensures that the food or drink warmed by heat generated during cooking on the inner side where food or drink is stored, does not easily cool down, and prevents the generation of harmful substances, thereby havinghygienic safety.

Moreover, a temperature-sensing unit 170 capable of measuring a temperature may be provided on one side of the heater A to control the proper temperature of the container body 110.

At this time, the temperature-sensing unit is interlocked with an electric field unit 340 of the power module 300, which can control the heat which is transmitted during cooking according to the temperature sensing, so that an appropriate temperature can be transmitted to the inside of the container module 100.

Meanwhile, a bubble sensing part 180 capable of sensing the generation of bubbles at the time of cooking food or drink is provided on the upper part of the container body 110 of the container module 100, which prevents bubbles from increasing excessively and negatively affecting the cooking beforehand.

As necessary, preferably, in an embodiment of the present invention, a bubble-sensing unit 180 is formed on the upper part of the container module 100, that is, on the upper part of the container body 110.

In addition, referring to FIG. 5, at least one crushing protrusion 112 is formed on the inside surface of the container body 110 of the container module 100, thereby improving the effect of crushing food or drinkdue to a rotary blade 140.

The position and the number of the crushing protrusions 112 can be variously arranged and the crushing force by the rotary blade 140 increases, and so there is an advantage that the food or drink can be completed at a higher speed than a conventional cooker.

In one embodiment, as the distance between the food or drink and the rotary blade 140 is narrowed, the protruding crushing protrusions 112 collide with food or drinkto form a vortex, and the food or drink that has not been crushed by the rotary blade 140 is again crushed, thereby improving the crushing power of the whole food or drink.

In addition, the crushing protrusion 112 plays a role as a supporting base when a mechanism for other cooking is provided in the container body 110.

Meanwhile, the container cover 120 of the container module 100 covers and seals the opened inner space of the container body 110, and has a shape corresponding to the opened upper shape, and is detachably configured so as to discharge the completed food or drink inside the container body.

Further, in the container module 100, a cover fixing part 111a, which can be fixed so that the container cover 120 is not separated and food or drink dose not leak when coupledwith the container body 110, is provided in the upper part of a handle 111.

In one embodiment, the cover fixing part 111a is formed in a lock/unlock mode which is switched in a sliding manner as shown in FIG. 2.

In addition, the container cover 120 includes an injection hole 123 capable of inserting the food materials used for food or drink into the container body 110 in a state of being covered on the upper part of the container body 110; and a stopper 121 of a size capable of putting the injection hole 123 having the opened hole shape.

At this time, the stopper 121 performs a function of preventing the food or drink contained in the container body 110 from being discharged to the outside during crushing or cooking and, as necessary, can be used as a measuring cup that further forms a weighing scale on the side of the stopper 121 to measure the amount of food or drink.

On the other hand, referring to FIG. 5 again, the container cover 120 further forms a cover packing 124 at an edge surface contacting with the container body 110, and the cover packing 124 functions to maintain a tight binding and prevent internal food or drink from being discharged to the outside, when the container body 110 and the container cover 120 are coupled.

In this case,the cover packing 124 is disposed on the stepped part of the container cover 120, and is provided so as to perform double packing or more including at least two or more ring-shaped protrusions, and is preferably formed of an insulating material such as rubber or the like.

In addition, the container cover 120 further includes a fixing latch 122 protruding downward on one side of the endpart.

The fixing latch 122 is fixedly inserted into the latching groove 211 formed in the upper housing 200a of the housing module 200 described later.

In this case, the latching groove 211 is formed in a corresponding position and size so that the fixing latch 122 can be inserted and fitted to the upper part of the outer mounting groove 210 of the upper housing 200a.The fixation of the latch groove 211 and the fixing latch 122 stably attach the container module 100 to the housing module200 and prevents shaking during the crashing or cooking process.

Subsequently, a rotary blade 140 axially connected to the power module 300 is provided inside the container body 110, so that the food material in the inner space of the container body 110 is crushed by utilizing a rotational force delivered from the power module 300, thereby facilitating the cooking.

Referring to FIGS. 3 and 4 again, preferably, the rotary blade 140 is installed on the inside bottom surface of the container body 110 of the container module 100 and is formed by the coupling of a plurality of blades 141 and 142, thereby exerting a crushing force by rotation.

More specifically, the rotary blade 140 has a rotary shaft 143 which is rotated by a power-transmitting unit 390 of a power module 300 described later, and the rotary blade includes a bending blade 141 fixed to the rotary shaft 143 and having a curved shape that is curved along a bottom surface of an inner space of the container body 110 of the container module 100, and a horizontal blade 142 fixed to the rotation shaft 143.

As necessary, the bending blade 141 and the horizontal blade 142 may be formed as a single blade, or may be radially formed in a plurality of blades.

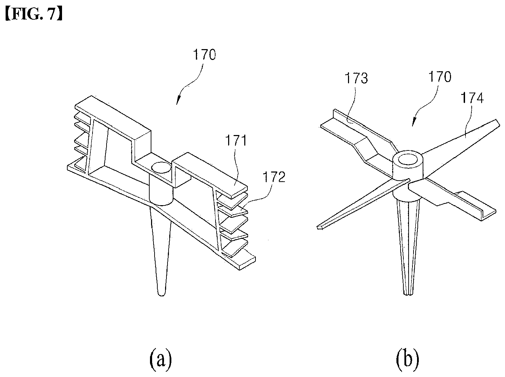

Meanwhile, FIG. 7 is a view showing a crushing controller coupled to a rotary blade of a food processing and cooking apparatus according to the present invention.

Refening to FIG. 7(a) and FIG. 7(b), as necessary, the rotary blade 140 is disposed so as to be detachableat the upper part and includes a crushing controller 170 capable of controlling the food crushing force of the rotary blade 140 during cooking.

The crushing controller 170 can be selected according to the method of cooking food or drink, and it may be mounted on the upper part of the rotary blade 110 and plays a role of raising food raw materials ingredients crushed to have a function and size capable of stirring the crushed food or drink, to the upper side of the container body 110.

As shown in FIG. 7(a), the crushing controller 170 forms symmetrical wings 171 on both sides of a center axis and includes a plurality of projections 172 at the ends of the wings.

The wings 171 are a frame shape that mixes food or drink but forms a thin skeleton so as not to maximally interfere with the circulation of food or drink.The protrusions 172 are formed at various angles, and the food or drink crushed to a certain size by raising the crushed food raw materials according to the rotation of the rotary blade 140 is no longer crushed by the rotary blade 140 but floated on the rising part of the food or drink.

As shown in FIG. 7(b), the crushing controller 170 forms a protective wing 173 which covers the rotary blade 140 according to the blade shape of the rotary blade 140 and prevents the exertion of a crushing force, and includes a bar wing 174 having no sharpness so that the food or drink is mixed

At this time, the protective wing 173 mixes the food or drink while rotating.

The crushing controller 170 may be selected, as needed, to adjust the crushing operation of the rotary blades 140 so that a user can perform a desired operation and cook various foods, and it is not limited to the same shape as the embodiment of the present invention.

When a user wishes to eat a liquid food in a completely crushed state or to eat food mixed with a predetermined amount of raw materials according to their taste or preference, the user may selectively use a crushing controller as shown in FIG. 7(a).

In addition, when the user wishes to eat food by mixing certain powder and liquid for shaking, the user can use a crushing controller as shown in Fig. 7(b).

As described above, the crushing controller 170 has an effect capable of cooking food or drink according to the user's taste.

On the other hand, referring to FIGS. 2 to 4 and FIG. 6 again, in order to rotate the rotary blade 140, a lower part of the rotating shaft 143 is provided with a rotating member 150 that is male and female-coupled with a coupler 394 of the power-transmitting unit390 to transmit power.

The rotating member 150 is engaged with a coupler 394 disposed in the housing module 200 and is female and male-coupled rotatably. The power transmitted from the power-transmitting unit 390 through the rotating member 150is again transmitted to the rotary blade 140, so that the rotary blade 140 performs the crushing operation.

Meanwhile, when the rotating member 150 is engaged with the coupler 394 by the female and male coupling, it is configured in a shape including at least one protruding edge so as not to generate shaking or noise, so that the rotating member 150 can be tightly coupled.

Meanwhile, referring to FIG. 6, the container base 130 of the container module 100 is provided with a fixed switch 160 for allowing the rotating member 150 to pass through and to fix it, and a plurality of connection terminals 132 arranged in the circumferential direction at intervals of a predetermined distance around the rotation member 150 are formed.

The connection terminal 132 is formed to have a certain length or more, and is provided with electric power generated and transmitted by the power module 300, and at the same time, is inserted into the connection hole 223a of the connection guide block 223 formed in the upper housing 200a of the housing module 200 described later, thereby preventing vibration and noise.

In addition, the container base 130 is designed so that the rotating member 150 can be switched in the lock/unlock mode by the sliding rotation of the fixing switch 160.

When the rotating member (150) is arranged in the unlock mode by the sliding rotation of the fixing switch 160, the rotary blade 140 and the rotating member 150 connected to and fixed to the rotary shaft can be separated.

Therefore, it is possible to maintain clean rotary blade 140 before and after cooking food or drink, and to wash the rotary blade 140 so that the rotary blade 140 can be easily driven during cooking.

In addition, the coupling between the rotating member 150 and the coupler 394 is configured so as to be able to be coupled only in the lock mode of the fixing switch 160, so that the rotary blade 140 can be safely driven without being pulling outduring the crushing operation and the cooking operation,

Meanwhile, referring to FIG. 3, the lower part of the container module 100 further includes a temperature-sensing unit 170 for measuring the internal temperature as described above.

The temperature-sensing unit 170 includes a temperature fuse that automatically shuts off the power supply when the temperature rises above a certain level.

Preferably, the temperature fuse includes a first temperature fuse that shuts off a power supply when the temperature of the container module 100 or the housing module 200 reaches a predetermined temperature, and a second temperature fuse that completely shuts off the power supply and thus prevents overheating when the limit temperature is exceeded after the first temperature fuse is shut down.

The first temperature fuse temporarily stops the operation of the heater (A) when the temperature becomes a predetermined temperature or higher, thereby stopping the heating of the food or drink and shutting off the power supply. The temperature above the prescribed temperature is set at 80°C to 180°C.

When the temperature decreases below a specified temperature or higher, the first temperature fuse allows the shutoff operation of the heater to restore, thereby restarting the heater A.

When the temperature rises above the temperature set by the first temperature fuse, the second temperature fuse permanently blocks the driving of the heater A to stop the food heating and the power supply, and the specified temperature or higher is set between 180°C and 300°C.

In this way, the temperature fuses are duplexed by the temperature-sensing unit 170, so that the overheating phenomenon of the apparatus can be suppressed and the user can safely cook the food or drink without danger.

Next, the housing module 200 of the food processing and cooking apparatus 1 according to the present invention will be described with reference to Figs. 1 to 4 again.

As described above, the housing module 200 is composed by the coupling of the upper housing 200a and the lower housing 200b. A power module 300 is provided on the inner space where the upper housing 200a and the lower housing 200b are formed.

Further, the container module 100 is detachably attached to the mounting grooves 210, 220 on which the upper housing 200a is formed.

In addition, the upper housing 200a has a display unit 270, which allows the user to control the cooking operation.

According to the invention, the mounting groove is composed of an outer mounting groove 210 and a lower mounting groove 220.

According to the invention, the outer mounting groove 210 is formed on the side of the upper housing 200a while having a corresponding size and shape so that the outer surface of the container body 110 of the container module 100 can be mounted.

According to the invention, the lower mounting groove 220 has a corresponding size and shape so that the lower end of the container module 100, that is, the container base 130, can be mounted, and is formed at a lower part of the upper housing 200a.

The outer mounting groove 210 and the lower mounting groove 220 described above serve to support the container module 100, and also preventsshaking of the container module 100 caused by vibrations during the crushing operation or the cooking operation,thereby minimizing the movement and maximizing the stability of the apparatus.

Meanwhile, as necessary, the outer mounting groove 210 and the lower mounting groove 220 further comprises a cushioning member made of a rubber material or an iron-based alloy material along the rim so as to further reduce noise and vibration when contacting with the container module 100.

Also, when the container module 100 is attached to the outer mounting groove 210, the upper housing 200a having the outer mounting groove 210 formed therein is further provided with a rotary switch part23 0 for fixing the container module 100 on the upper side where the outer mounting groove 210 is formed.

At this time, the rotary switch part 230 has a slide protrusion 231 protruding outward by riding on the protrusion groove 232 according to the operation.

In response to the switching operation of the rotary switch part 230, the slide protrusion 231 is protruded to the outside, and the protruded slide protrusion 231 allows the end part on which the fixing latch 122 of the container cover 120 of the container module 100 is formed to push in the horizontal direction, thereby closely attaching to the cover fixing part 111a.

By fixing the slide protrusion 231 of the rotary switch part 230 and the container cover 120 of the cover fixing part 111a provided on the handle 111 of the container module 100, the container module 100 is more stably attached to the outer mounting groove 210 without shaking, thereby preventing and reducing vibration and noise.

On the other hand, one side forming the slide protrusion 231 of the rotary switch part 230 is provided with a latch groove 211 inserting and fixing a fixing latch 122 formed on the container cover (120) of the container module 100.

Subsequently, the lower mounting groove 220 is preferably formed so as to have an inclination in the outward direction from the central part where the container module 100 is mounted, one side of which is provided with a drain port 221 connected with a pipe line 260 having a lower height than the central part and communicating with the outside.

The drain port 221 serves to preventliquid food or drink from overflowing in the container module 100 during cooking, or water produced during cooking or leaked water from damaging the inside of the equipment, and the drain port 221 allows the liquid flowing down based on the inclination angle (a in FIG. 3) of the lower mounting groove 220 to discharge to the outside through the pipe line 260 of the lower housing 200b.

Meanwhile, the lower mounting groove 220 further includes a plurality of stepped grooves 222 in which a plurality of fitting steps 131 protruded and formed at the lower end part of the container module 100, that is, at the outer peripheral surface of the container base 130, are slidably inserted and fixedy coupled.

Further, the lower mounting groove 220 includes a connection guide block 223 having a plurality of connection holes 223a through which a plurality of connection terminals 132 disposed on a lower surface of the container base 130 of the container module 100 can be inserted or contained.

The connection terminal 132 is inserted into a terminal hole 351 of the connection block 350 farmed on a base bracket 310 of a power module 300 to be described later and supplied with electric power.

The connection guide block 223 has a size and a position that allows the connection block 350 of the power module 300 to be mounted therein by the coupling of the upper housing 200a and the lower housing 200b, and the connection hole 223a of the connection guide block 223 is formed at a position corresponding to the terminal hole 351 of the connection block 350.

Meanwhile, the upper part or the whole of the connection guide block 223 is preferably formed of an insulating material such as silicone or rubber so that electric power does not leak to the outside.

The center part of the lower mounting groove 220 is provided with a coupler 394 which is rotatedby the coupling with the rotating member 150 of the container module 100.

Meanwhile, the upper housing 200a includes a display part 270 having a display, and a button capable of controllingthe driving such as the state of cooking and the degree of cooking.

The display part 270 is interlocked with anelectric field unit 340 of the power module 300, and confirms the process of cooking in real time.

Further, the upper housing 200a includes an exhaust hole 280 formed of a plurality of through holes, and the exhaust hole 280 is interlocked with a duct channel 371 formed in the motor cover 370 of the power module 300 and performs a function of discharging the heat and carbon powder generated in the power module 300 to the outside.

Further, the lower housing 200b is coupled with the upper housing 200a to form a space in which the power module 300 can be provided therein, and has an anti-vibration member for reducing vibrations and noise and a structure capable of discharging the heat and carbon black to the outside.

Further, the power-transmitting unit 390 of the power module 300 is stably disposed at the lower part so that the power from motor M is easily transmitted to the rotary blade 140 of the container module 100.

To this end, the lower housing 200b is provided with a plurality of support bases for coupling with the upper housing, and ananti-vibration coupling unit 250 for installing the anti-vibration member 320.

Next, the power module 300 of the food processing and cooking apparatus 1 of the present invention will be described with reference to the figures again.

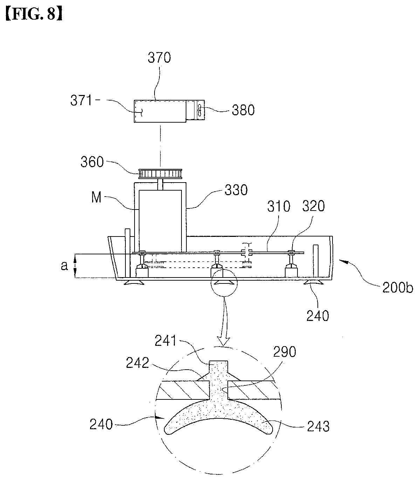

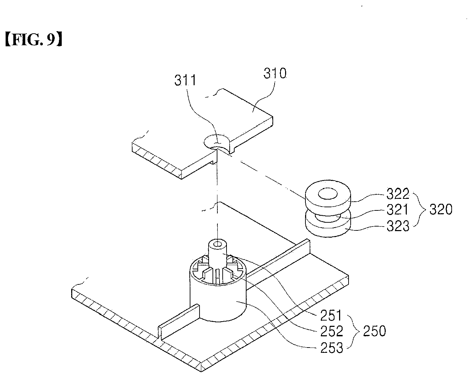

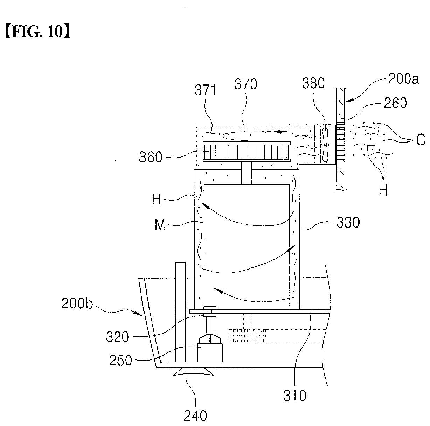

FIG. 8 is a schematic cross-sectional view showing a lower housing and a power module of a food processing and cooking apparatus according to the present invention. FIG. 9 is a view showing a first anti-vibration member of a food processing and cooking apparatus according to the present invention. FIG. 10 is a cross-sectional view showing a part of a power module of a food processing cooking apparatus according to the present invention.

Referring to the figures, including FIG. 3 and FIG. 4, the power module 300 is configured such that the rotary blade 130 of the container module 100 is rotated to provide power so as to perform a crushing operation of a food material, and it is largely composed of a base bracket 310, a motor box 330, a power-transmitting unit 390, and anelectric field unit340.

Preferably, the base bracket 310 has a size and shape capable of mounting to have an interval in the upper part of the lower housing 200b.

The motor box 330 is fixedly provided in the upper part of the base bracket 310, has a motor(M) for generating power therein, and has a box shape in which its upper part is opened.

Further, the power-transmitting unit 390 is located on a space between the base bracket 310 and the lower housing 200b, and has a belt or gear structure which transmits the rotational force of the motor (M) to the rotary blade 140 of the container module 100, thereby transmitting the rotational force of the motor (M) based on these positions and coupling.

Further, the electric field unit 340 electronically controls the driving of the motor (M) and electrically controls the operation of the heater (A) and the operation of the discharge fan.

The base bracket 310 is located at a height equal to the length of the bottom surface of the lower housing 200b and the anti-vibration coupling unit 250, the upper part of which is provided with a connection block 350 in which the connection terminal 132 is inserted, and a motor box 330 having a motor(M).

A power-transmitting unit 390 is provided in the space (a) formed by the upper surface of the base bracket 310 and the lower housing 200b, so that the power of motor (M) is transmitted to the rotary blade 140.

Meanwhile, the base bracket 310 has a first anti-vibration member 320 which can prevent the generation of vibration and noise beforehand, while the motor (M) of the power module 300 rotates, and reduce the vibration and noise to a minimum, thereby increasing the stability and efficiency of the cooking apparatus. In addition, the lower housing 200b includes a second anti-vibration member 240.

Specifically, the power-transmitting unit 390 of the power module 300 includes a first drive shaft 391 arranged so as to be connected to one end of the motor (M), and a second drive shaft 392 which receives a rotation power from the first drive shaft and transmits it to the rotary blade (140) of the container module, wherein the first drive shaft 391 and the second drive shaft 392 are configured such that the power is transmitted by atransfer member 393 of a gear and a drive belt.

A motor speed detection sensor (not shown) is provided between the motor (M) and the first drive shaft 391 as necessary, and the detection sensor detects the speed at which motor rotates, and transfers the results to the electric field unit 340.

Then, the electric filed unit 340 to which the detected speed and the like are transmitted controls the over-speed or deceleration appropriately, and finally control the rotation speed of the rotary blade 140 to which the power is transmitted, so that the cooking of the appropriate level desired by the user is completed

Next, the first anti-vibration member 320 is inserted between a large number of anti-vibration grooves 311 formed at intervals along the outer peripheral surface of the base bracket 310 to reduce vibration and noise, and it is penetrated and fixed to the upper part of the anti-vibration coupling unit 250 while having the length, that is, the height, on the upper surface of the lower housing 200b.

Thus, the first anti-vibration member 320 is mounted while being in contact with the base bracket 310 and the lower housing 200b, thereby reducing vibration and noise transmitted to the base bracket 310 during the operation of the motor 320 of the power module 300.

Meanwhile, the upper surfaces of the base bracket 310 and the lower housing 200b have a constant interval (a) depending on the height of the anti-vibration coupling unit 250, and the vibration and noise are once more reduced by the air layer of the inner space formed by the interval (a), and the anti-vibration efficiency is increased.

Next, the second anti-vibration member 240 is formed so as to protrude downward while being penetratively coupled to a through hole formed in the bottom surface of the lower housing 200b.

The part protruding downward as described above is in contact with the bottom surface of table or the like on which the food processing and cooking apparatus 1 according to the present invention is placed, and reduces the vibration generated in the power module 300.

Preferably, the first anti-vibration member 320 and the second anti-vibration member 240 are made of a rubber or iron-based alloy material that is in loading load, absorbing amount of vibration energy, molding workability and adhesiveness.

More specifically, the first anti-vibration member 320 has a dumbbell shape so as to be fitted and inserted in the anti-vibration groove 311 of the base bracket 310 in the side direction.

Specifically, referring to FIG. 9, the first anti-vibration member 320 includes a fitting mat 321 having the same thickness and size as those of the anti-vibration groove so that the anti-vibration groove 311 is fitted and inserted therein, an upper mat 322 having a thickness and formed so as to extend from the upper part of the fitting mat 321 and located in contact with the upper surface of the base bracket 310, and a lower mat 323 which is formed so as to extend to the lower part of the fitting mat 321 and located in contact with the bottom surface of the base bracket 310.

Referring to FIG. 8, the second anti-vibration member 240 is penetrated and coupled to a through hole 290 of the lower housing 200b and includes a fitting rod 241 which has a length penetrating the through hole 290 and fixing over the upper surface of the lower housing 200b, and an anti-vibration mat 243 formed so as to protrude to the lower part of the lower housing 200b integrally with a lower part of the fitting rod 241.

Preferably, the anti-vibration mat 243 has a suction mouth shape and is adsorbed and fixed while being in contact with a bottom surface of a table or the like on which the food processing and cooking apparatus 1 is placed.

On the other hand, the anti-vibration coupling unit 250 formed in the lower housing 200b is fitted and fixed to the first anti-vibration member 320, and it has a length and a height on the upper surface of the lower housing 200b to be protruded, and located so that the base bracket 310 is spaced apart from the upper surface of the lower housing 200b.

The anti-vibration unit 250 is composed of a fitting rod 251, a support base 252, and a spacing rod 253.

The fitting rod 251 passes through the first anti-vibration member 320 to fix the position of the first anti-vibration member 320.

The support base 252 has a shape in which the lower part of the fitting rod 251 is extended, and is formed radially while supporting in contact with the bottom surface of the first anti-vibration member 320.

The radially formed support base 252 reduces fine vibration and noise transmitted through the first anti-vibration member 320 to further maximize the efficiency of reducing vibration and noise.

Meanwhile, the spacing rod 253 supports the lower part of the support base 252 and has a length, but the length of the spacing rod 253 is equal to the distance(a) between the base bracket 310 and the lower housing 200b.

Meanwhile, the food processing and cooking apparatus 1 according to the present invention is configured such that the heat and carbon powder generated by the rotation of motor M of the power module 300 are discharged to the outside to further improve the stability of the cooking apparatus.

Referring to FIGS. 8 and 10, the power module 300 includes a first discharge fan 360 and a motor cover 370 having a duct channel 371 at an upper part of the motor box 330.

In this case, the first exhaust fan 360 is equipped with a motor (M) therein, and is positioned above a motor box 330 having an inner space, but it is connected to the shaft of motor (M) and driven together during the operation of the motor, and forms a vortex on the inner space of the motor box 330, thereby transferring heat (H) and carbon powder (C) to the upper side of the motor box 330.

On the other hand, the motor cover 370 includes the first exhaust fan 360 therein and has a duct channel 371 for containing the first discharge fan 360 and guiding the airflow. However, the heat (H) and carbon powder (C) transferred to the upper sider of the motor box 330 by the vortex formed by the first discharge fan 360 are transferred along the duct channel 371 and discharged to the outside.

In this case, preferably, the end part of the duct channel 371 is formed so as to communicate with the exhaust hole 280 formed on one side of the upper housing 200a, and the heat (H) and carbon powder (C) transferred along the duct channel 371 are discharged to the outside of the food processing and cooking apparatus 1 through the exhaust hole 280.

Thereby, it is possible to ensure the stability according to the operation of the motor by discharging the heat (H) and the carbon powder (C) generated by the driving of the motor (320) to the outside.

On the other hand, as necessary, there is further provided a second exhaust fan 380 for increasing the air flow speed inside the duct channel 371 which is disposed at the end part of the duct channel 371, that is, at the position communicating with the exhaust hole 280.

In this manner, the heat in the food processing and cooking apparatus 1 and the carbon powder generated in the motor can be discharged to the outside by the structure including a first discharge fan 360, a motor cover 370 having the duct channel 371, and a second discharge fan 380, thereby increasing the stability of the equipment, preventing malfunction, and improving the efficiency of the cooking operation.

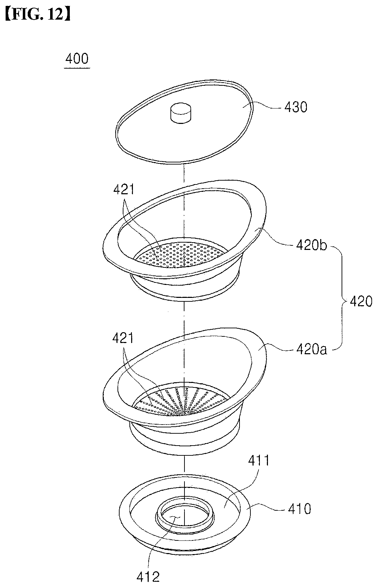

FIG. 11 is a view showing a state of including a steam cooking module of a food processing cooking apparatus according to the present invention, and FIG. 12 is an exploded perspective view showing a steam cooking module of a food processing and cooking apparatus according to the present invention.

As described above, the food processing and cooking apparatus 1 according to the present invention further comprises a steamer 400 detachably attached to the upper part of the housing module 200 as necessary.

The steamer 400 is attached to the upper part of the container module 100 and can cook a separate food or drink other than the cooking in the container module 100 by using the steam diffused during cooking of the food or drink using the food material.

To this end, the steamer 400 is configured such that the outer peripheral surface thereof is closely attached to the upper part of the container module 100, and has a steam transfer part 410 that diffuses the steam uniformly through the center hole 412.

There is provided a cooking unit 420 which includes the central hole 412 of the steam transfer part 410, is attached to the upper mounting groove 411 of the steam transfer part 410, and is configured so as to include an inner space having a size enough to contain the food to be cooked, and a plurality of through holes 421 through which steam is passed.

In addition, it includes a cooking cover part 430 having a shape corresponding to the upper shape of the cooking unit 420.

Meanwhile, preferably, the cooking unit 420 can be divided into a first cooking diffusion part 420a and a second cooking diffusion part 420b.

The first cooking diffusion part 420a diffuses the steam supplied through the steam transfer part 410 widely as it goes upward, and is disposed in contact with the steam transfer part 410, so that a large amount of steam is transferred. Therefore, it is used for cooking using a large amount of steam and heat.

The second cooking diffusion part 420 b is disposed above the first cooking diffusion part 420 and performs the cooking using steam diffused in the first cooking diffusion unit 420a and less heat.

On the other hand, the first cooking diffusing part 420a and the second cooking diffusing part 420b have preferably a tapered shape that widens from the lower part to the upper part so that the passed steam can be uniformly diffused.

It will be apparent to those skilled in the art that the present invention described above can be variously modified and changed without departing from the scope of the invention, which is defined in the appended claim, and thus is not limited to the above-mentioned embodiment and the attached drawings.

## Claims

1. A food processing and cooking apparatus including:
a container module (100) having a rotary blade (140) for crushing a food material contained in an inner space;
a housing module (200) formed by the coupling of an upper housing for supporting the container module and a lower housing coupled to the upper housing; and
a power module (300) mounted by a base bracket in the inner space of the
housing module and transmitting power generated by a motor to a power-transmitting unit to rotate the rotating blade,
wherein the container module is detachably mounted while preventing from being shaken by a mounting groove of the upper housing, and the power module is configured such that vibration and noise are reduced by an anti-vibration member (240), **characterized in that** the mounting groove includes: an outer mounting groove (210) formed on a side part of the upper housing while having a corresponding size and shape so that the outer surface of the container module can be mounted, and
a lower mounting groove (220) formed in a lower part of the upper housing while having a corresponding size and shape so that the lower end of the container module can be mounted,
the lower mounting groove, where the container module is mounted, being formed so as to have an inclination (α) with respect to a horizontal plane in the outward direction from a central part, one side of the lower mounting groove being provided with a drain port (221) connected with a pipe line (260) and having a lower height than the central part of the lower mounting groove, said pipe line communicating with the outside.

## Patentansprüche

1. Vorrichtung zum Verarbeiten und Kochen von Lebensmitteln, mit:
einem Behältermodul (100) mit einem Drehmesser (140) zum Zerkleinern eines Lebensmittelmaterials, das in einem Innenraum enthalten ist;
einem Gehäusemodul (200), das durch Verbinden eines oberen Gehäuseteils zum Halten des Behältermoduls mit einem mit dem oberen Gehäuseteil verbundenen unteren Gehäuseteil gebildet wird;
einem Leistungsmodul (300), das durch einen Grundhalter im Innenraum des Gehäusemoduls montiert ist und das durch einen Motor erzeugte Leistung zu einer Kraftübertragungseinheit überträgt, um das Drehmesser zu drehen,
wobei das Behältermodul abnehmbar montiert ist, während verhindert wird, dass es durch eine Montagenut des oberen Gehäuses erschüttert wird, und wobei das Leistungsmodul derart konfiguriert ist, dass Vibrationen und Geräusche durch ein Anti-Vibrations-Element (240) reduziert werden,
**dadurch gekennzeichnet, dass**
die Montagenut aufweist:
eine äußere Montagenut (210), die an einem Seitenteil des oberen Gehäuseteils ausgebildet ist und eine entsprechende Größe und Form hat, so dass die Außenfläche des Behältermoduls montiert werden kann; und
eine untere Montagenut (220), die in einem unteren Teil des oberen Gehäuseteils ausgebildet ist und eine entsprechende Größe und Form aufweist, so dass das untere Ende des Behältermoduls montiert werden kann,
wobei die untere Montagenut, an der das Behältermodul montiert ist, derart ausgebildet ist, dass sie eine Neigung (α) in Bezug auf eine horizontale Ebene nach außen gerichtet von einem Mittelteil hat, wobei eine Seite der unteren Montagenut mit einer Auslassöffnung (221) versehen ist, die mit einer Rohrleitung (260) verbunden ist und eine geringere Höhe hat als der Mittelteil der unteren Montagenut, wobei die Rohrleitung mit der Außenseite kommuniziert.

## Revendications

1. Appareil de traitement et cuisson d'aliments incluant :
un module de récipient (100) présentant une lame rotative (140) pour écraser une matière d'aliments contenue dans un espace interne ;
un module de boîtier (200) formé par le couplage d'un boîtier supérieur pour supporter le module de récipient et un boîtier inférieur couplé au boîtier supérieur ; et
un module de puissance (300) monté par un support de base dans l'espace interne du module de boîtier et transmettant de la puissance produite par un moteur à une unité de transmission de puissance pour faire tourner la lame rotative,
dans lequel le module de récipient est monté de manière détachable tout en évitant d'être secoué par une rainure de montage du boîtier supérieur, et le module de puissance est configuré de sorte que vibration et bruit sont réduits par un élément anti-vibration (240), **caractérisé en ce que** la rainure de montage inclut :
une rainure de montage externe (210) formée sur une partie latérale du boîtier supérieur tout en présentant une dimension et forme correspondantes de sorte que la surface externe du module de récipient peut être montée, et
une rainure de montage inférieure (220) formée dans une partie inférieure du boîtier supérieur tout en présentant une dimension et forme correspondantes de sorte que l'extrémité inférieure du module de récipient peut être montée,
la rainure de montage inférieur, où le module de récipient est monté, étant formée afin de présenter une inclinaison (α) par rapport à un plan horizontal dans la direction extérieure à partir d'une partie centrale, un côté de la rainure de montage inférieure étant muni d'un orifice de drainage (221) connecté à une canalisation (260) et présentant une hauteur inférieure à la partie centrale de la rainure de montage inférieure, ladite canalisation communiquant avec l'extérieur.
